# EUROPEAN PATENT SPECIFICATION

(11) **EP 0 994 576 B1**
(45) Date of publication and mention of the grant of the patent: **16.05.2007**
(21) Application number: 99119767.4
(22) Date of filing: 06.10.1999
(51) Int. Cl.: H04B 7/005

(54) **A spread spectrum communication system with transmission power control**
Ein Spreizspektrumnachrichtenübertragungssystem mit Sendeleistungsregelung
Un système de communication avec étalement du spectre et avec commande de la puissance d'émission

(30) Priority: 13.10.1998 GB 9822248
(43) Date of publication of application: 19.04.2000
(73) Proprietor: SIEMENS AKTIENGESELLSCHAFT, 80333 München (DE)
(72) Inventor: Chambers, Peter, Ringwood, Hampshire BH24 1NY (GB)
(74) Representative: Payne, Janice Julia

(56) References cited:
- WO-A-94/29981
- WO-A-98/36508

## Description

The present invention relates to communication system, in particular, a Universal Mobile Telecommunications System (UMTS), employing, for example, a Code Division Multiple Access (CDMA) cellular mobile radio system.

Typically, a cellular communications system comprises a plurality of cells, each supported by a respective base station. In operation, the base station is capable of two-way communication with a mobile terminal associated with the cell supported by the base station; this usually being the cell within which the mobile terminal is located. In the proposed UMTS Terrestrial Radio Access (UTRA) Frequency Division Duplex (FDD) system operating a CDMA system, down-link transmissions, i.e. those from the base station to the mobile terminal, have a predefined structure. The predefined structure comprises a groups of 72 consecutive frames, each of 10 ms duration. Each frame comprises 15 consecutive time slots, each time slot including a plurality of pilot bits, two Transmission Power Control (TPC) bits, two Transmission Format Indicator (TFI) bits, and a plurality of data bits corresponding to a communication of a subscriber, for example, voice or data traffic. The TFI bits represent information relating to the interleaving and coding schemes to be employed in relation to the transmission of the communication of the subscriber between the mobile terminal and the base station.

In order to execute a handoff from the CDMA-based system to another telecommunications system, for example a Global System for Mobile Communications (GSM) system, or to execute a channel frequency change, the UTRA system has a system protocol for dividing a down-link frame (hereinafter referred to as a "divided frame mode") in order to provide an interval for the mobile terminal to change frequencies or to receive and/or measure signals from an adjacent base station of an adjacent cell. In such cases, a satisfactory Signal to Noise Ratio (SNR) is maintained by boosting power of transmissions from the base station and reducing processing gain. The divided frame mode is sometimes referred to as 'frame slotting', or 'slotting mode frame operation'. In order to provide the interval for measurement, the divided frame mode compresses the frame for division as necessary in order to accommodate a measurement interval; according to the UTRA system protocol, the measurement interval may occupy up to 50% of a frame period.

Document WO-A-94 29981 discloses a DS-CDMA system using non-continuous transmission.

Additionally, during a divided frame, the normal slot-by-slot stream of the down-link frame is broken and thus a control loop for TPC must be suspended and re-connected somehow.

A possible solution to such a problem is to provide a 'hold' facility in the sampled power control loop of the network to ride out the gap in transmission. This solution is, however, somewhat problematic as channel conditions can change invalidating the held values for power control on the up-link prior to the interval.

During a period of up to 5 ms (which corresponds to a divided frame with a 50% measurement interval) the required up-link power level can move further than the amount the power level might move during one time slot when the control loop is closed. Therefore, it can be seen that the power level on the up-link can drift considerably.

When compressing the frame, the integrity of the TPC bits can be compromised with a consequential SNR degradation resulting in the communication becoming degraded, or even breaking down. After the interval for measurement has expired, recovery of a signal transmitted by the base station is particularly difficult due to changes in power level of the received signal during the interval, thus making the integrity of the TPC bits all the more important.

It is therefore an object of the present invention to provide a system which includes frame division without unduly compromising the integrity of the TPC bits and therefore reliability or performance of the system, and obviate or at least mitigate the problem of power level drift.

According to the present invention, there is provided a spread-spectrum communications system comprising a first terminal capable of communicating a frame to a second terminal, the frame including a predetermined quantity of power control data associated therewith, and the second terminal being capable of operating in a frame division mode, whereby transmission of the frame is halted for a predetermined period of time after which transmission of the remainder of the frame is resumed, and wherein a first quantity of power control data is transmitted prior to the predetermined period of time and a second quantity of power control data is transmitted after the predetermined period of time, the second quantity of power control data being greater than the first quantity of power control data.

Preferably, each time slot of the frame transmitted prior to the predetermined period of time includes a respective portion of the first quantity of power control data, and each time slot of the frame transmitted after the predetermined period of time includes a respective portion of the second quantity of power control data, wherein the size of the respective portion of the second quantity of data is greater than the size of the respective portion of the first quantity of power control data. More preferably, the respective portion of the first quantity of power control data is 2 bits in length and the respective portion of the second quantity of power control data is 4 bits in length.

The second terminal may comprise an enhanced power control decoder arranged to decode the second quantity of power control data. Preferably, the sum of the first quantity of power control data and the second quantity of power control data is substantially equal to the predetermined quantity of power control data.

Preferably, the respective portion of the second quantity of power control data may conform to an enhanced power control scheme, whereby the presence of at least three like bits corresponds to an increment or decrement in power of signals transmitted by the second terminal. Conveniently, the presence of an equal quantity of like bits corresponds to the power of signals transmitted by the second terminal remaining unchanged. More preferably, at least three logical HIGH bits correspond to a power increase and at least three logical LOW bits correspond to a power decrease.

Preferably, the enhanced power control scheme is arranged so that the presence of at least four like data bits corresponds to larger increment or decrement in power of the signals transmitted by the second terminal.

The second terminal may further comprise a normal power control decoder arranged to decode the first quantity of power control data.

Preferably, the frame includes data relating to coding and/or interleaving. More preferably, the data relating to coding and/or interleaving are TFI bits.

Preferably, the power control data are TPC bits.

It is thus possible to provide a spread spectrum communication system capable of reducing power drift and maintaining integrity of power control data in the event of bit errors.

At least one embodiment of the present invention will now be described, by way of example, with reference to the accompanying drawings, in which:
Figure 1 is a schematic diagram of a typical terminal arrangement to which an embodiment of the invention can be applied;
Figure 2 is a block diagram showing, in part, an apparatus for use with the arrangement of Figure 1;
Figure 3 is a block diagram showing a power controller of Figure 2 constituting an embodiment of the invention in greater detail;
Figure 4 is a schematic diagram of a frame structure used by the embodiment of Figure 3;
Figure 5 is a schematic diagram illustrating transmission of the frames of Figure 4;
Figure 6 is a schematic diagram showing a time slot of a frame constituting an embodiment of the invention, and
Figure 7 is a table showing a command protocol for use with the time slot of Figure 6.

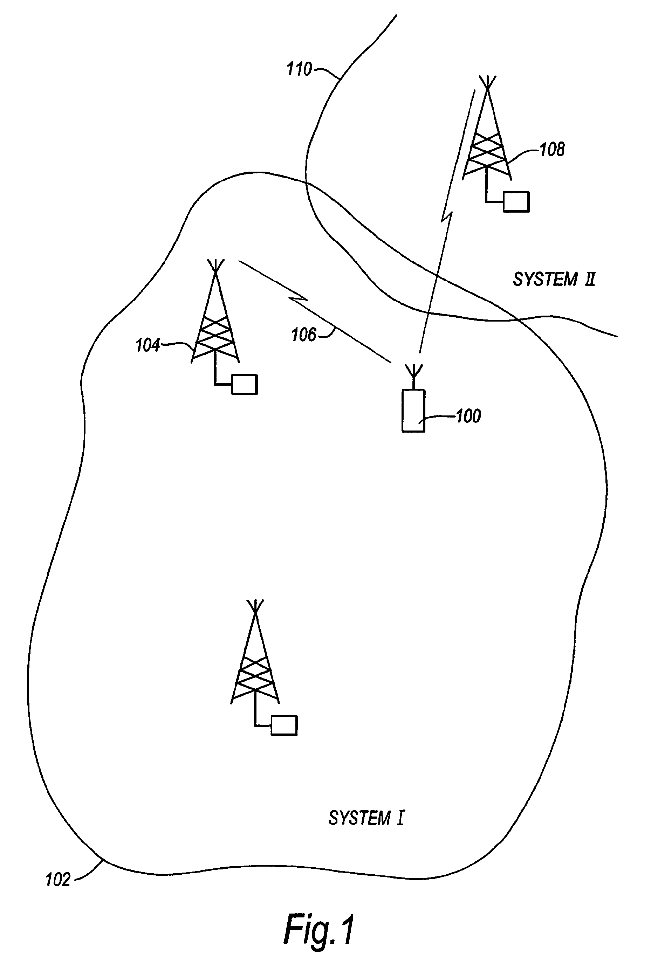

Referring to Figure 1, a CDMA cellular telecommunications system comprises a mobile terminal 100 located within a cell 102 supported by a first base station 104 of a first system (SYSTEM I), the mobile terminal 100 being capable of communicating with the first base station 104 via a Radio Frequency (RF) interface 106.

The mobile terminal 100 is capable of communicating with a second base station 108, the second base station 108 supporting a second cell 110 of a second system (SYSTEM II), for example, a GSM system.

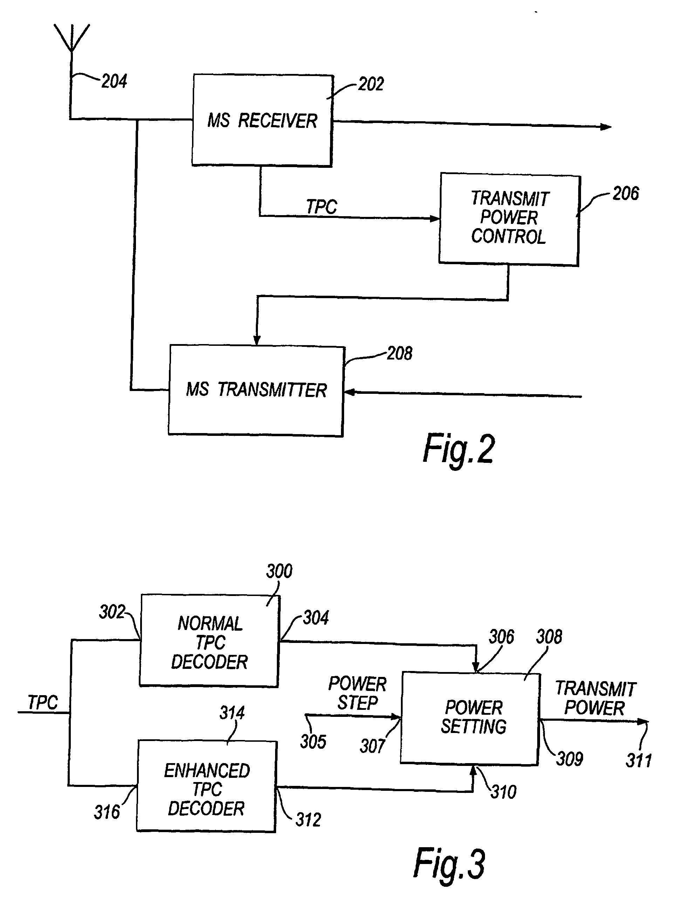

The mobile terminal 100 (Figure 2) is constructed in accordance with the UMTS FDD standard, and includes a receiver unit 202 coupled to an antenna 204 and a TPC unit 206. The TPC unit 206 is coupled to a transmitter unit 208, the transmitter unit 208 being coupled to the antenna 204. The receiver unit 202 and the transmitter unit 208 are coupled to an interface (not shown) which is coupled to other functional entities of the mobile terminal 100 which do not relate to the present invention and so are not described herein in order to maintain clarity and simplicity of description.

Referring to Figure 3, the TPC unit 206, comprises a 2-bit TPC decoder 300 having an input terminal 302 for receiving TPC bits received from the first base station 104 and an output terminal 304 coupled to a first input terminal 306 of a power controller 308. The power controller 308 has a second input terminal 307 for receiving a power step signal (Δ_{TPC}) 305 received from the network, and an output terminal 309 for supplying an amplification control signal 311, the amplification control signal 311 corresponding to how much the mobile terminal 100 has to amplify a given signal to be transmitted. A third input terminal 310 of the power controller 308 is coupled to an output terminal 312 of an enhanced TPC decoder 314, the enhanced TPC decoder 314 having an input terminal 316 for receiving the TPC bits. The enhanced TPC decoder 314 operates in accordance with an enhanced TPC scheme, the purpose of which will become apparent later in this description. The amplification control signal 311 is proportional to the power step signal (Δ_{TPC}) 305 and the signals generated by either the 2-bit TPC decoder 300 or the enhanced TPC decoder 314.

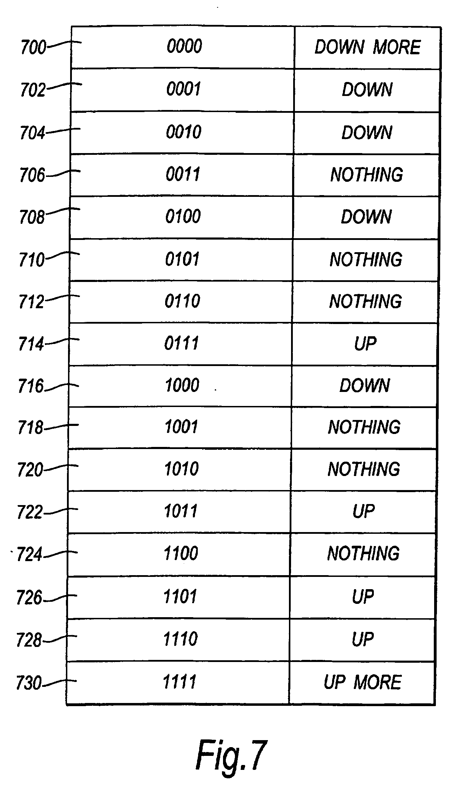

Referring to Figure 7, the enhanced TPC scheme comprises a series of 4-bit codes indicative of amounts of the power increments/decrements, or step Δ_{TPC}. In the enhanced TPC scheme, the balance of like bits in a given 4-bit code signify a decrement, an increment or no change. The quantum of the increment or decrement is determined by the exact number of bits in the given 4-bit code. For example, the 4-bit code '1111' signifies a large power increment, such as a double size increment, whilst the 4-bit code '0000' signifies a large power decrement, such as a double size decrement. There are six 4-bit codes which signify no power increment or decrement (37.5%). In the cases of the large increments or decrements, a single bit error caused during transmission of the 4-bit code by the base station 104 will result in a small change in the correct direction (i.e. increment or decrement) instead of a large change in the correct direction, and a double bit error will cause no increment or decrement. The enhanced TPC scheme also comprises two sets of four 4-bit codes (25% each) which decode to a small increments or decrements in a given direction, and a single bit error in these will decode to a large change in the right direction or no increment or decrement, and a double bit error may lead to a small change in the wrong direction (which is what the normal, i.e. not enhanced, 2-bits TPC scheme does). Clearly, the integrity of such enhanced TPC codes remains substantially in-tact in the event of bit errors.

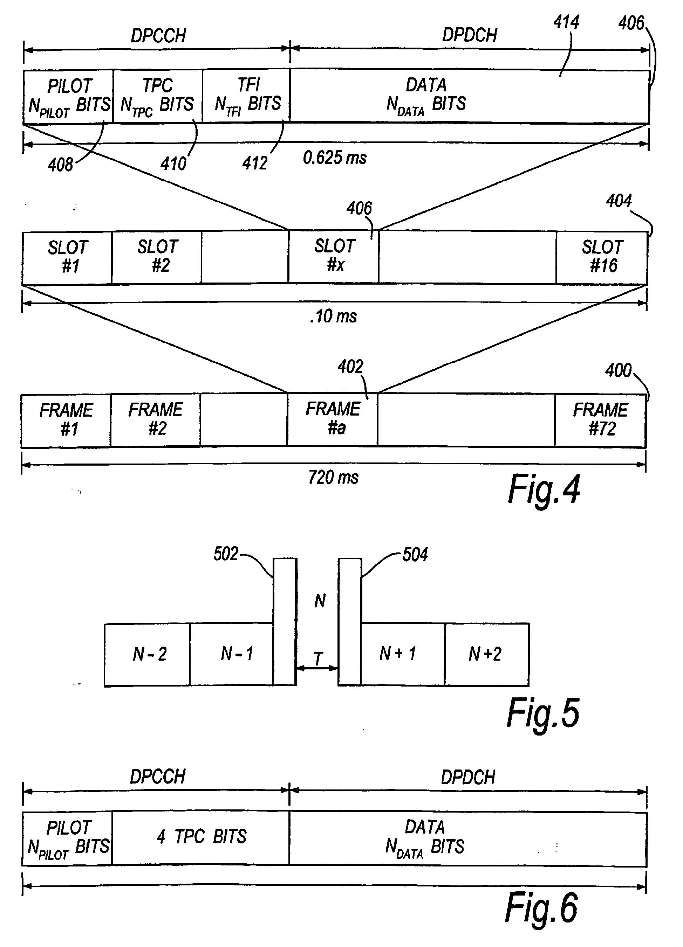

Communications between the mobile terminal 100 and the first base station 104 conform to a predefined structure shown in Figure 4. The predefined structure of a Dedicated Physical Control Channel (DPCCH) comprises a groups of 72 consecutive frames 400, each of 10 ms duration. Each frame 402 comprises 16 consecutive time slots 404, each time slot 406 including a plurality of pilot bits 408, two Transmission Power Control (TPC) bits 410, two Transmission Format Indicator (TFI) bits 412, and a plurality of data bits 414 corresponding to a communication of a subscriber, for example, voice or data traffic. In accordance with the UTRA system, each frame must contain a required total of 32 TFI bits and a total of 32 TPC bits.

The first base station 104 is capable of operating in a frame division mode, whereby whilst transmitting, for example, a first, second, third, fourth and fifth frame N-2, N-1, N, N+1, N+2 (Figure 5) constituting a series of frames, transmission of a predetermined frame, such as the third frame N, is halted for a period of time, or interval T to enable the mobile terminal 100 to receive signals transmitted by the second base station 108, in order to make, for example, power measurements.

Of course, it should be appreciated that the time interval T can be used for purposes other than measuring signals for facilitating handoffs, for example, switching to different carrier frequencies.

In operation, the first data frame N-2 is transmitted by the first base station 104 to the mobile terminal 100, after which the second data frame N-1 is transmitted by the first base station 104 to the mobile terminal 100. When not in the frame division mode, the TPC bits of the first and second data frames N-2, N-1 are decoded by the 2-bit TPC decoder 300, resulting in a decoded control signal at the output terminal 304. The power controller 308 generates the amplification control signal in response to the power step signal 305 and the decoded control signal generated by the 2-bit TPC decoder 300.

When the mobile terminal 100 has to measure power levels of signals transmitted by the second base station 108, the network of SYSTEM I instructs the first base station 104 to enter the frame division mode. In response to the instruction from the network, a first portion 502 of the third data frame N is transmitted with fewer TPC bits, the omitted TPC bits being replaced by TFI bits. Once the beginning of the interval T is reached, the synthesiser (not shown) of the mobile terminal 100 re-tunes in order to receive the signals transmitted by the second base station 108 in order to measure the power of the signals received from the second base station 108. The synthesiser of the mobile terminal 100 then re-tunes back to the frequency of the first base station 104 before expiry of the interval T in order to receive a second portion 504 of the third frame N.

When transmitting the second portion 504 of the third frame N, the first base station 104 transmits fewer TFI bits, the omitted TFI bits being replaced by 4-bit enhanced TPC codes according to the enhanced TPC scheme described above. The enhanced TPC bits are received by the antenna 204 and decoded by the enhanced TPC decoder 314 of the mobile terminal 100.

The enhanced TPC decoder 314 generates an enhanced decoded control signal which is used by the power controller 308 to generate the amplification control signal 311 in conjunction with the power step signal 305, the power amplification signal 311 being passed to the transmitter unit 208.

Thus, in the frame division mode, a total of 32 TPC bits per frame 402 are available. When enhanced TPC bits are required in some slots, a compensating number of TPC bits in other slots must be replaced by TFI bits in order to provide the required 32 TFI bits.

Increasing the TPC bits from 2 (signalling) up/down to 4 (signalling a 4-level shift) and possibly increasing the maximum possible Δ_{TPC} helps to mitigate the effects of the gap on power control. Even allocating three bits to TPC can help.

It will be appreciated that in a system according to the invention, FDD fast power control may be enhanced in order to cope with the gap in control flow which divided frame mode operation causes.

## Claims

1. A spread-spectrum communications system comprising a first terminal capable of communicating a frame to a second terminal, the frame including a predetermined quantity of power control data associated therewith, and the second terminal being capable of operating in a frame division mode, whereby transmission of the frame is halted for a predetermined period of time after which transmission of the remainder of the frame is resumed, and wherein a first quantity of power control data is transmitted prior to the predetermined period of time and a second quantity of power control data is transmitted after the predetermined period of time, the second quantity of power control data being greater than the first quantity of power control data.

2. A system as claimed in Claim 1, wherein each time slot of the frame transmitted prior to the predetermined period of time includes a respective portion of the first quantity of power control data, and each time slot of the frame transmitted after the predetermined period of time includes a respective portion of the second quantity of power control data, wherein the size of the respective portion of the second quantity of data is greater than the size of the respective portion of the first quantity of power control data.

3. A system as claimed in Claim 2, wherein the respective portion of the first quantity of power control data is 2 bits in length and the respective portion of the second quantity of power control data is 4 bits in length.

4. A system as claimed in Claim 1, wherein the second terminal comprises an enhanced power control decoder arranged to decode the second quantity of power control data.

5. A system as claimed in Claim 1, wherein the sum of the first quantity of power control data and the second quantity of power control data is substantially equal to the predetermined quantity of power control data.

6. A system as claimed in Claim 2, wherein the respective portion of the second quantity of power control data conforms to an enhanced power control scheme, whereby the presence of at least three like bits corresponds to an increment or decrement in power of signals transmitted by the second terminal.

7. A system as claimed in Claim 6, wherein the presence of an equal quantity of like bits corresponds to the power of signals transmitted by the second terminal remaining unchanged.

8. A system as claimed in Claim 7, wherein at least three logical HIGH bits correspond to a power increase and at least three logical LOW bits correspond to a power decrease.

9. A system as claimed in Claim 6, wherein the enhanced power control scheme is arranged so that the presence of at least four like data bits corresponds to a larger increment or decrement in power of the signals transmitted by the second terminal.

10. A system as claimed in Claim 1, wherein the second terminal further comprises a normal power control decoder arranged to decode the first quantity of power control data.

## Patentansprüche

1. Ein Spreizspektrumnachrichtenübertragungssystem, das ein erstes Endgerät besitzt, das einen Rahmen an ein zweites Endgerät senden kann, wobei dieser Rahmen eine vorbestimmte Menge von zugehörigen Leistungsregelungsdaten enthält; wobei das zweite Endgerät in einem Rahmenteilungsmodus arbeiten kann, in dem das Senden des Rahmens für ein vorbestimmtes Zeitintervall angehalten und nach Ablauf dieses Intervalls mit dem Senden des restlichen Teils des Rahmens fortgesetzt wird; und wobei vor dem vorbestimmten Zeitintervall eine erste Menge von Leistungsregelungsdaten und nach dem vorbestimmten Zeitintervall eine zweite Menge von Leistungsregelungsdaten gesendet wird, wobei die zweite Menge von Leistungsregelungsdaten größer als die erste ist.

2. Ein System gemäß Anspruch 1, wobei sich in jedem vor dem vorbestimmten Zeitintervall gesendeten Zeitschlitz des Rahmens eine bestimmte erste Menge von Leistungsregelungsdaten und in jedem nach dem vorbestimmten Zeitintervall gesendeten Zeitschlitz des Rahmens eine bestimmte zweite Menge von Leistungsregelungsdaten befindet; und wobei die zweite Menge der besagten Leistungsregelungsdaten größer als die erste Menge ist.

3. Ein System gemäß Anspruch 2, wobei die bestimmte erste Menge von Leistungsregelungsdaten 2 Bits lang und die bestimmte zweite Menge von Leistungsregelungsdaten 4 Bits lang ist.

4. Ein System gemäß Anspruch 1, wobei das zweite Endgerät einen verbesserten, zum Dekodieren der zweiten Menge von Leistungsregelungsdaten eingerichteten Leistungsregelungs-Dekoder enthält.

5. Ein System gemäß Anspruch 1, wobei die Summe der ersten Menge und der zweiten Menge von Leistungsregelungsdaten im Wesentlichen gleich der vorbestimmten Menge von Leistungsregelungsdaten ist.

6. Ein System gemäß Anspruch 2, wobei die bestimmte zweite Menge von Leistungsregelungsdaten einem erweiterten Leistungsregelungs-Schema entspricht, in dem das Vorhandensein von mindestens drei gleichen Bits einer Erhöhung oder Absenkung der Leistung der vom zweiten Endgerät gesendeten Signale entspricht.

7. Ein System gemäß Anspruch 6, wobei das Vorhandensein einer gleichen Anzahl gleicher Bits einem Unverändertbleiben der Leistung der vom zweiten Endgerät gesendeten Signale entspricht.

8. Ein System gemäß Anspruch 7, wobei das Vorhandensein von mindestens drei den Logikpegel HIGH besitzenden Bits einer Leistungserhöhung und von mindestens drei den Logikpegel LOW besitzenden Bits einer Leistungsabsenkung entsprechen.

9. Ein System gemäß Anspruch 6, wobei das erweiterte Leistungsregelungs-Schema so konzipiert ist, dass das Vorhandensein von mindestens vier gleichen Datenbits einer stärkeren Erhöhung oder Absenkung der Leistung der vom zweiten Endgerät gesendeten Signale entspricht.

10. Ein System gemäß Anspruch 1, wobei das zweite Endgerät zusätzlich einen normalen Leistungsregelungs-Dekoder besitzt, der für das Dekodieren der ersten Menge von Leistungsregelungsdaten eingerichtet ist.

## Revendications

1. Système de communication à spectre étalé comprenant un premier terminal capable de communiquer une trame à un second terminal, la trame contenant une quantité prédéterminée de données de commande de puissance y associées, et le second terminal étant capable de fonctionner dans un mode à division de trame, ce par quoi la transmission de la trame est arrêtée pendant un laps de temps prédéterminé après lequel la transmission du restant de la trame reprend, et dans lequel une première quantité de données de commande de puissance est transmise avant le laps de temps prédéterminé et une seconde quantité de données de commande de puissance est transmise après le laps de temps prédéterminé, la seconde quantité de données de commande de puissance étant plus grande que la première quantité.de données de commande de puissance.

2. Système selon la revendication 1, dans lequel chaque tranche de temps de la trame transmise avant le laps de temps prédéterminé contient une partie respective de la première quantité de données de commande de puissance et chaque tranche de temps de la trame transmise après le laps de temps prédéterminé contient une partie respective de la seconde quantité de données de commande de puissance, la taille de la partie respective de la seconde quantité de données étant plus grande que la taille de la partie respective de la première quantité de données de commande de puissance.

3. Système selon la revendication 2, dans lequel la partie respective de la première quantité de données de commande de puissance a une longueur de 2 bits et la partie respective de la seconde quantité de données de commande de puissance a une longueur de 4 bits.

4. Système selon la revendication 1, dans lequel le second terminal comprend un décodeur de commande de puissance amélioré agencé pour décoder la seconde quantité de données de commande de puissance.

5. Système selon la revendication 1, dans lequel la somme de la première quantité de données de puissance de commande et de la seconde quantité de données de commande de puissance est sensiblement égale à la quantité prédéterminée de données de commande de puissance.

6. Système selon la revendication 2, dans lequel la partie respective de la seconde quantité de données de commande de puissance est conforme à un mécanisme de commande de puissance amélioré, ce par quoi la présence d'au moins trois bits identiques correspond à un incrément ou à un décrément de la puissance des signaux transmis par le second terminal.

7. Système selon la revendication 6, dans lequel la présence d'une quantité égale de bits identiques correspond au fait que la puissance des signaux transmis par le second terminal reste inchangée.

8. Système selon la revendication 7, dans lequel au moins trois bits HAUT logique correspondent à une augmentation de puissance et au moins trois bits BAS logique correspondent à une diminution de puissance.

9. Système selon la revendication 6, dans lequel le mécanisme de commande de puissance amélioré est agencé de telle sorte que la présence d'au moins quatre bits de données identiques correspond à un plus grand incrément ou décrément de la puissance des signaux transmis par le second terminal.

10. Système selon la revendication 1, dans lequel le second terminal comprend par ailleurs un décodeur de commande de puissance normal agencé pour décoder la première quantité de données de commande de puissance.
